# EUROPÄISCHE PATENTSCHRIFT

(11) **EP 0 777 061 B1**
(45) Veröffentlichungstag und Bekanntmachung des Hinweises auf die Patenterteilung: **26.11.2003**
(21) Anmeldenummer: 96117044.6
(22) Anmeldetag: 24.10.1996
(51) Int. Cl.: F16D 65/12

(54) **Bremsscheibe**
Brake disc
Disque de frein

(30) Priorität: 24.11.1995 DE 19543799
(43) Veröffentlichungstag der Anmeldung: 04.06.1997
(73) Patentinhaber: Deutsches Zentrum für Luft- und Raumfahrt e.V, 53127 Bonn (DE)
(72) Erfinder: Krenkel, Walter, 71272 Renningen (DE); Kochendörfer, Richard, 70619 Stuttgart (DE)
(74) Vertreter: Grimm, Ekkehard, Dipl.-Phys.

(56) Entgegenhaltungen:
- FR-A- 2 620 499
- GB-A- 1 433 090
- US-A- 3 732 953
- US-A- 3 809 192
- PATENT ABSTRACTS OF JAPAN vol. 007, no. 089 (M-207), 13.April 1983 & JP 58 013237 A (SADAYUKI KOTANINO), 25.Januar 1983,
- PATENT ABSTRACTS OF JAPAN vol. 010, no. 360 (M-541), 3.Dezember 1986 & JP 61 157840 A (TOSHIBA CORP), 17.Juli 1986,

## Beschreibung

Die Erfindung bezieht sich auf eine Bremsscheibe aus einem Kohlenstoffmaterial bzw. aus Karbon.

Aus der DE 32 24 192 A1 sowie aus der EP 0 374158 B1 sind Bremsscheiben bekannt, die einteilig ausgebildet sind und aus einem Kohlenstoffmaterial bzw. aus Karbon bestehen.

Die FR-A-2 620 499 zeigt eine Bremsscheibe für Scheibenbremsen von Fahrzeugen, die aus einem Werkstoff aus der Gruppe der Kohlenstoffe besteht. Diese Bremsscheibe ist dreiteilig aufgebaut: auf einem Träger sind beiderseits nicht tragende Reibringe als Verschleißschichten angeordnet. Zur Verbindung der Reibringe mit dem Träger sind ebenfalls aus einem Werkstoff aus der Gruppe der Kohlenstoffe bestehende Bolzen vorgesehen, die in axial angeordneten, durchgehenden Bohrungen durch Klemmung gehalten sind. Bei einem Verschleiß der Reibringe werden diese durch neue Reibringe ersetzt; zur Befestigung dieser neuen Reibringe werden durchgehende Bohrungen neu eingebracht und anschließend neue Bolzen eingepreßt.

In Patent Abstracts of Japan, Vol. 007, No. 089 (M-207), JP-A-58-013 237 ist eine Bremsscheibe gezeigt, bei der auf einem sternförmigen Träger zwei tragende Reibringe angeordnet sind. Zur Verbindung der Reibringe mit Armen des Trägers sind Bolzen mit einem verdickten Mittelteil vorgesehen, wobei das Mittelteil jeweils von einer korrespondierenden Bohrung in den Armen aufgenommen ist und die verjüngten Enden in Bohrungen in den Reibringen vernietet sind. Zur weiteren Abstützung sind zwischen den Armein weitere Bolzen zwischen den Reibringen angeordnet; hier wirkt das verdickte Mittelteil der Bolzen als Distanzstück zwischen den Reibringen.

Schließlich ist in der nicht vorveröffentlichten DE-A-44 45 226 eine Bremsscheibe aus einem Kohlenstoff bzw. einem kohlenstoffaserverstärkten Kunststoff bzw. Carbon beschrieben, bei der zwei Reibringe über zwischen innenseits der Reibringe angeordnete Rippen mittels eines Verfahrens miteinander verbindbar sind.

Aufgabe der Erfindung ist es, eine verbesserte und einfachere Verbindungsmöglichkeit der beiden Reibringe einer Bremsscheibe zu schaffen.

Diese Aufgabe wird erfindungsgemäß durch die kennzeichnenden Merkmale des Anspruchs 1 gelöst Weitere vorteilhafte Merkmale beinhalten die Unteransprüche.

Die mit der Erfindung hauptsächlich erzielten Vorteile bestehen darin, daß die beiden Reibringe statt mittels einer Verbindung über die Rippen, wie nach dem Hauptpatent, nunmehr alleinig über zylinderförmige Zapfen verbunden werden. Eine Verbindung dieser Zapfen mit den Reibringen erfolgt in bekannter Verfahrensweise beispielsweise in einen Hochvakuumofen oder dergleichen, in der eine unlösbare Verbindung zwischen den Reibringen und den Zapfen hergestellt wird.

Die Zapfen sind erfindungsgemäß mit einem verdickten Mittelteil und verjüngten Endteilen versehen, die in Bohrungen der beiden Reibringe hineinragen. Diese Zapfen fixieren die beiden Reibringe zueinander. Das verdickte Mittelteil stützt die Reibringe auf einem Absatz ab, so daß sich ein gleicher Luftspalt zwischen den Reibringen bildet.

Die durchgehenden Rippen der nicht vorveröffentlichten DE-A-44 45 226, welche die Luftkanäle bilden, entfallen, so daß die Abstandsstücke nunmehr an deren Stelle treten. Halbrippen können noch vorgesehen sein.

Wahlweise können die Bohrungen zur Aufnahme der Endteile der Abstandsstücke Sackbohrungen oder Durchgangsbohrungen sein, wobei aber auch eine Kombination dieser Bohrungen möglich ist.

Ein Ausführungsbeispiel der Erfindung ist in der Zeichnung dargestellt und wird im folgenden näher beschrieben.

Es zeigen
- Fig. 1: einen Schnitt durch eine Bremsscheibe mit zwei Reibringen und Zapfen gemäß Linie I-I der Fig. 2,
- Fig. 2: eine Draufsicht auf eine Bremsscheibe mit Aufnahmebohrungen für die Zapfen und Durchgangsbohrungen in den Reibringen und
- Fig. 3: einen Schnitt durch die Reibringe der Bremsscheibe mit kombinierter Anordnung von Aufnahmebohrungen als Sacklöcher oder als Durchgangsbohrungen.

Eine innenbelüftete Bremsscheibe 1 umfaßt zwei Reibringe 2, 3 und einen Topf. Die Reibringe 2, 3 weisen durchgehende Bohrungen 7 auf.

Eine Verbindung der beiden Reibringen 2, 3 erfolgt über Zapfen 30 und/oder 30a. Diese sind vorzugsweise zylinderförmig ausgeführt und weisen ein verdicktes Mittelteil 31 und Endteile 32; 32a auf, die gegenüber dem Mittelteil 31 im Durchmesser kleiner ausgebildet sind.

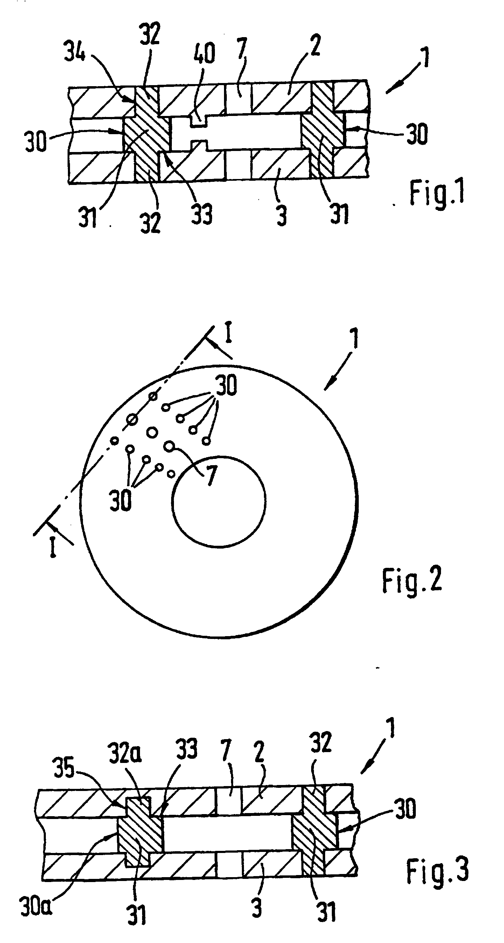

Die Endteile 32 ragen in Bohrungen der Reibringe 2, 3, die als Sackbohrungen 35 oder als Durchgangsbohrungen 34 ausgeführt sein können. Es kann auch eine Kombination von Sackbohrungen 35 und Durchgangsbohrungen 34 gewählt werden, was beispielsweise in Fig. 3 näher dargestellt ist.

Zwischen dem Mittelteil 31 und den Endteilen 32 ist jeweils ein Absatz 33 ausgebildet, auf den sich die Reibringe 2, 3 abstützen können.

Die Zapfen 30, 30a sind in der Weise in der Bremsscheibe 1 plaziert, daß sich quasi radial verlaufende Kanäle ergeben, die von dem Mittelteil 31 der Zapfen 30 markiert werden.

Zum Verbinden der beiden Reibringe 2, 3 miteinander werden diese über die Zapfen 30, 30a zusammengesetzt bzw. gesteckt und dann in einem Hochvakuumofen durch Klebung oder dergleichen miteinander verbunden.

Zusätzlich zu den Zapfen 30, 30a können die Reibringe 2, 3 innenseitig jeweils noch Halbrippen 40 aufweisen, die je nach den Erfordernissen hinsichtlich Festigkeit, Schwingungsverhalten plaziert sein können.

## Patentansprüche

1. Bremsscheibe für Scheibenbremsen von Fahrzeugen, bestehend aus einem Werkstoff der Gruppe der Kohlenstoffe, **dadurch gekennzeichnet, dass** die Bremsscheibe als innenbelüftete Bremsscheibe aus zwei einzelnen Reibringen (2, 3) gebildet ist, die unlösbar miteinander verbunden sind, wobei die beiden Reibringe über Zapfen (30; 30a) miteinander verbunden sind, welche ein verdicktes Mittelteil (31) und hierzu abgesetzte Endteile (32; 32a) aufweisen.

2. Bremsscheibe nach Anspruch 1, **dadurch gekennzeichnet, dass** die Endteile (32; 32a) jeweils in Bohrungen (34; 35) der beiden Reibscheiben (2, 3) hineinragen und das verdickte Mittelteil (31) eine abstandsgenaue Abstützung der beiden Reibscheiben (2, 3) über Absätze (33) bildet.

3. Bremsscheibe nach den Ansprüchen 1 oder 2, **dadurch gekennzeichnet, dass** die Bohrungen (35) zur Aufnahme der Endteile (32a) des Zapfens (30a) aus Sackbohrungen in beiden Reibringen (2, 3) bestehen.

4. Bremsscheibe nach den Ansprüchen 1 oder 2, **dadurch gekennzeichnet, dass** die Bohrungen (34) zur Aufnahme der Endteile (32) des Zapfens (30) aus Durchgangsbohrungen in beiden Reibringen (2, 3) bestehen.

5. Bremsscheibe nach einem oder mehreren der vorhergehenden Ansprüche, **dadurch gekennzeichnet, dass** die Reibringe (2, 3) eine Kombination von Durchgangsbohrungen (34) und Sackbohrungen (35) zur Aufnahme der Endteile (32, 32a) der Zapfen (30, 30a) aufweisen.

6. Bremsscheibe nach einem der Ansprüche 1 bis 5, **dadurch gekennzeichnet, dass** zusätzliche, durchgehende Bohrungen (7) vorgesehen sind.

7. Bremsscheibe nach Anspruch 6, **dadurch gekennzeichnet, dass** die Zapfen (30) annähernd mit gleichem Abstand zu den durchgehenden Bohrungen (7) in den Reibringen (2, 3) angeordnet sind.

8. Bremsscheibe nach einem der Ansprüche 1 bis 7, **dadurch gekennzeichnet, dass** die Zapfen (30; 30a) durch Klebung im Hochvakuumofen mit den beiden Reibringen (2, 3) verbunden sind.

## Claims

1. Brake disk for disk brakes of vehicles comprising a material of the carbon group, **characterized in that** the brake disk is formed as a ventilated brake disk of two individual friction rings (2, 3) which are undetachably connected with one another, wherein the two friction rings are connected with one another by way of pins (30; 30a) which have a thickened center part (31) and have set-off end parts (32; 32a).

2. Brake disk according to claim 1, **characterized in that** the end parts (32; 32a) each project into respective bores (34, 35) of the two friction rings (2, 3) and the thickened center part (31) forms a support by way of steps (33), with a precise spacing between with the two friction rings (2, 3).

3. Brake disk according to claim 1 or 2, **characterized in that** the bores (35) consist of pocket bores in both friction rings (2, 3) for receiving the end parts (32a) of the respective pins (30a).

4. Brake disk according to claim 1 or 2, **characterized in that** the respective bores (34) for receiving the end parts (32) of the respective pins (30) consist of through-bores in both friction rings (2, 3).

5. Brake disk according anyone of the proceeding claims, **characterized in that** the friction rings (2, 3) have a combination of through-bores (34) and pocket bores (35) for receiving respective end parts (32, 32a) of the pins (30, 30a).

6. Brake disk according to one of claims 1 to 5, **characterized in that** additional through-bores (7) are provided.

7. Brake disk according to claim 6, **characterized in that** the pins (30) are arranged approximately at the same distance from through-bores (7) in the friction rings (2, 3).

8. Brake disk according anyone of the claims 1 to 7, **characterized in that** the pins (30; 30a) are connected with the both friction rings (2, 3) by gluing in a high vacuum furnace.

## Revendications

1. Disque pour freins à disques de véhicules automobiles, se composant d'un matériau du groupe des carbones, **caractérisé en ce que** le disque de frein est réalisé comme disque de frein à ventilation interne composé de deux bagues de friction séparées (2, 3) qui sont reliées entre elles de manière inamovible, les deux bagues de friction étant reliées entre elles par des chevilles (30; 30a) qui présentent une partie médiane épaissie (31) et une partie d'extrémité décalée (32; 32a)

2. Disque de frein selon la revendication 1, **caractérisé en ce que** les parties d'extrémité (32; 32a) s'engagent respectivement dans des perçages (34; 35) des deux rondelles de friction (2, 3) et la partie médiane épaissie (31) formant à distance précis un appui des deux rondelles de friction (2, 3) au-dessus de talons (33).

3. Disque de frein selon les revendications 1 ou 2, **caractérisé en ce que** les perçages (35) se composent pour le logement des parties d'extrémité (32a) de la cheville (30a) des trous borgnes dans les deux bagues de friction (2, 3).

4. Disque de frein selon les revendications 1 ou 2, **caractérisé en ce que** les perçages (34) pour le logent des parties d'extrémité (32) de la cheville (30) se composent de perçages continus dans les deux bagues de friction (2, 3).

5. Disque de frein selon une ou plusieurs des revendications précédentes, **caractérisé en ce que** les bagues de friction (2, 3) présentent une combinaison de perçages continus (34) et de trous borgnes (35) pour le logement des parties d'extrémité (32, 32a) des chevilles (30, 30a).

6. Disque de frein selon l'une des revendications 1 à 5, **caractérisé en ce qu'**il est prévu des perçages supplémentaires continus (7).

7. Disque de frein selon la revendication 6, **caractérisé en ce que** les chevilles (30) sont disposées dans les bagues de friction (2, 3) approximativement à même distances des perçages continus (7).

8. Disque de frein selon l'une des revendications 1 à 7, **caractérisé en ce que** les chevilles (30; 30a) sont reliées par collage dans des fours à vide poussé avec les deux bagues de friction (2, 3).
